# EUROPEAN PATENT SPECIFICATION

(11) **EP 3 088 155 B1**
(45) Date of publication and mention of the grant of the patent: **03.06.2020**
(21) Application number: 16161160.3
(22) Date of filing: 18.03.2016
(51) Int. Cl.: B29C 45/14, B62J 25/00, B60N 3/04

(54) **INSERT MOLDING COMPONENT AND MANUFACTURING METHOD OF INSERT MOLDING COMPONENT**
EINSATZFORMKOMPONENTE UND HERSTELLUNGSVERFAHREN DER EINSATZFORMKOMPONENTE
COMPOSANT DE MOULAGE D'INSERT ET PROCÉDÉ DE FABRICATION ASSOCIÉ

(30) Priority: 28.04.2015 JP 2015092332
(43) Date of publication of application: 02.11.2016
(73) Proprietor: Honda Motor Co., Ltd., Minato-ku Tokyo 107-8556 (JP)
(72) Inventor: HORIUCHI, Tetsu, Saitama 351-0193 (JP)
(74) Representative: Herzog, Markus

(56) References cited:
- EP-A1- 1 325 687
- EP-A1- 1 595 676
- DE-A1-102010 053 740
- US-A- 4 012 053
- US-A1- 2013 260 083

## Description

### Technical field

The present invention relates to insert molding component and manufacturing method of insert molding component.

### Background of the Invention

Conventionally, in a scooter type motorcycle and the like, a step floor member having anti-slipping function such as rubber and the like is provided on a floor on which a passenger put a foot. For example, in JP 2000-153792 A, the molding art for molding an integrally molded article integrating the floor mat and the floor panel is disclosed such that when a floor panel made of polypropylene is molded with a die, a floor mat made of polypropylene sheet cut down in a predetermined shape is positioned and set at the predetermined position in the die. According to the art, the floor mat is integrally and entirely molded on the footrest position of the floor panel.

DE 10 2010 053740 A1 representing the closest prior art discloses an insert molding component comprising a plate-like base member and a covering member (plastic material) integrally formed with said base member. The covering member is injected from the back side of the plate-like base member and covers the backside and a space between island areas (remaining areas) of the insert molding component, whereas a front surface of the base member is not covered with plastic material.

US 4,012,053 A and US 2013/260083 A1 represent further relevant prior art.

### SUMMARY OF THE INVENTION

### Problem to Be Solved by the Invention

In motorcycles and the like, since a step floor member is a member which is exposed to the outside, there are strong demands to change shapes and colors and the like of the step floor member so as to fit the individuality of the passenger. In addition, design palatability requires the step floor member which is not only made of the rubber, but also the step floor member which can combine the plate-like other member (base member) as well as can partly expose the surface of the other member.

It is possible for such step floor member to integrally form an insert molding component which is integrally molding a covering member including rubber and the like so as to cover a base member. In this case, there is a method to adhere an opening forming portion of a die to the surface of the base member at the time of insert molding and to prevent molten resin from flowing into the area on which the opening is formed, in order to form an opening which exposes the base member to the covering member. Then, it is necessary to consider the influence of the covering member on the reverse surface side of the base member and the control so as not to warp the base member by the adhesion of the die.

The present invention aims to facilitate the quality control while forming an opening which partly exposes the surface of the base member on a covering member, in an integrally formed insert molding component which is integrally molding the covering member on the plate-like base member and the manufacturing method.

### Means for Solving Problems

This object is solved by an insert molding component having the features of claim 1 and in particular by an insert molding component (25) comprising a plate-like base member (26) and a covering member (31) integrally formed with said base member (26), wherein
an opening (32b) exposing a surface (26m1) of said base member (26) is formed on one side of the plane perpendicular direction of said base member (26) in said covering member (31), and a molding supporting portion (36) supporting a reverse surface (26m2) of said base member (26) at the time of insert molding is provided on the other side of said covering member (31) in said plane perpendicular direction, where is a reverse side of said opening (32b),
wherein the covering member (31) has a surface covering portion (32) integrally formed on the surface (26m1) of said base member (26), and a reverse side covering portion (25) integrally formed on a reverse surface (26m2) side of the base member (26), said surface covering portion (32) having a surface outer periphery covering portion (34) extending with a predetermined width along an outer periphery edge of the base member (26), and a surface inner periphery covering portion (33) formed on the inner periphery side of the surface outer periphery covering portion (34) so as to be separated;
a base opening (27) is formed along the pattern shape of the surface inner periphery covering portion (33) on the part of the base member (26) where the surface (26m1) of said base member (26) is covered with said surface inner periphery covering portion (33), wherein the surface outer periphery covering portion (34) and the surface inner periphery covering portion (33) are solely connected on the reverse surface (26m2) side of the base member (26) via said base opening (27);
a plurality of construct portions (28) are formed and provided on the base opening (27) so as to cross the base opening (27) at proper points of the trace, drawing the shape of the surface inner periphery covering portion (33);
a widening portion (28a) is formed on a part of the plurality of construct portions (28) so as to form a circular shape with a larger diameter than the width of the construct portion (28); and
a locating hole (29), which is configured to position the base member (26) without forming the covering member (31) in the plane direction at the time of insert molding of the step floor member (25), is formed on the widening portion (28a).

The invention according to Claim 2 is characterized in that a locating hole (29) positioning the base member (26) in the plane direction at the time of insert molding is formed on the part where the surface (26m1) of the base member (26) is covered with the covering member (31).

The invention according to Claim 3 is characterized in that a projecting portion (37) which can attach the insert molding component (25) to a mating component (21) is formed so as to avoid the molding supporting portion (36) on the other side of the covering member (31) in the plane perpendicular direction, where is a reverse side of the opening (32b).

The above object is also solved by a manufacturing method of an insert molding component having the features of claim 4 and in particular by a manufacturing method of an insert molding component (25) comprising a plate-like base member (26) and a covering member (31) integrally formed with said base member (26), said manufacturing method forming a molding space (CV) by mold clamping a fixed die (41) and a movable die (42) of a die (40), and integrally forming the covering member (31) on the plate-like base member (26) set in the molding space (CV),
wherein an opening forming portion (47) of said die (40) is adhered to the surface (26m1) of said base member (26) in order to form the opening (32b) exposing the surface (26m1) of said base member (26) on the one side of said base member (26) of said covering member (31) in the plane perpendicular direction, simultaneously the manufacturing method includes: a plane perpendicular direction positioning process (S3) supporting the reverse surface (26m2) of said base member (26) on the other side of said base member (26) in said plane perpendicular direction, where is a reverse side of said base member (32b); a mold clamping process (S4) forming said molding space (CV) by mold clamping said fixed die (41) and said movable die (42) in a state that said opening forming portion (47) is adhered to the surface (26m1) of said base member (26) and the reverse surface (26m2) of said base member (26) is supported at the part where is the reverse side of said opening (32b); and a molding process (S5) forming said covering member (31) by injecting a covering member forming material (J) into said molding space (CV),
wherein the covering member (31) has a surface covering portion (32) integrally formed on the surface (26m1) of said base member (26), and a reverse side covering portion (25) integrally formed on a reverse surface (26m2) side of the base member (26), said surface covering portion (32) having a surface outer periphery covering portion (34) extending with a predetermined width along an outer peripheral edge of the base member (26), and a surface inner periphery covering portion (33) formed on the inner periphery side of the outer periphery covering portion (34) so as to be separated;
a base opening (27) is formed along the pattern shape of the surface inner periphery covering portion (33) on the part of the base member (26) where the surface (26m1) of said base member (26) is covered with said surface inner periphery covering portion (33), wherein the surface outer periphery covering portion (34) and the surface inner periphery covering portion (33) are integrally molded in said molding process via said base opening (27) such that the surface outer periphery covering portion (34) and the surface inner periphery covering portion (33) are solely connected on the reverse surface (26m2) side of the base member (26) via said base opening (27);
a plane direction positioning process (S2) is also included so as to position said base member (26) in the plane direction by a locating hole (29) formed on a part of the base member (26) where the surface (26m1) of said base member (26) is covered with said covering member (31);
a plurality of construct portions (28) are formed and provided on the base opening (27) so as to cross the base opening (27) at proper points of the trace, drawing the shape of the surface inner periphery covering portion (33);
a widening portion (28a) is formed on a part of the plurality of construct portions (28) so as to form a circular shape with a larger diameter than the width of the construct portion (28); and
the locating hole (29), which is configured to position the base member (26) without forming the covering member (31) in the plane direction at the time of insert molding of the step floor member (25), is formed on the widening portion (28a).

### Effect of the Invention

According to the invention mentioned in Claims 1 and 4, at the time of insert molding of the step floor member, and when the opening forming portion of the die is adhered to the base member, the pressing force on the base member by the opening forming portion is directly supported on the molding supporting portion (molding time supporting portion) from the reverse side of the base member. Therefore, the adhesion of the opening forming portion is secured and the occurrence of burrs and the like is suppressed, compared with the case that the molding supporting portion is provided at the position avoiding the opening. In addition to that, a warp and the like of the plate-like base member can be suppressed. Moreover, the base member can be efficiently supported on the minimum molding supporting portion, the supported mark of the base member on the reverse side can be reduced, simultaneously, securing the formability can be facilitated.

Furthermore, since the covering member covers the locating hole in the surface side of the base member, the locating hole is not exposed to the external appearance of the insert molding component, which suppresses the influence on the external appearance of the insert molding component.

When the covering member is formed on both surface and reverse of the base member, the covering member forming material can favorably flows, and also when the covering member has an elasticity, the bottom touching feeling of the covering member can be suppressed and the elasticity can be increased.

Moreover, in the configuration that the base opening portion is formed on the part where the covering member covers the surface of the base member, forming a projecting portion and the like on the reverse side of the part facilitates to generate the sink mark and the like on the surface of the covering member (design surface). Meanwhile, the projecting portion is provided for attaching to the mating components on the reverse side of the opening which is cut off from the surface by the base member. Accordingly, even if the base opening is formed, a sink mark and the like can be suppressed to generate by forming the projecting portion on the covering member on the surface side of the base member, which can increase the external appearance quality.

### Brief Description of the Drawings

FIG.1 is a left side view of the motorcycle in the embodiment of the present invention.
FIG.2 is a view on an II arrow of FIG.1.
FIG.3 is a perspective view of the step floor member of the above mentioned motorcycle.
FIG.4 is a plane view on the surface side of the above-mentioned step floor member.
FIG.5 is a sectional view taken along a V-V line in FIG.4.
FIG.6 is a sectional view taken along a VI-VI in FIG.4.
FIG.7 is a plane view on the reverse side of the above mentioned step floor member.
FIG.8 is an explanatory drawing showing a procedure of the insert molding of the above mentioned step floor member in order of (a) to (d).
FIG.9 is a flow chart of the manufacturing method of the above mentioned step floor member.

### Best Mode for Carrying Out the Invention

Hereinafter, the embodiment of the present invention will be explained with reference to the drawings. Moreover, the directions such as "front", "rear", "right", and "left" are the same as the directions of the vehicle in the following explanation, without any specific description. Furthermore, an arrow "FR" showing the front direction of the vehicle, an arrow LH showing the left direction of the vehicle, and an arrow "UP" showing the upper direction of the vehicle are shown on the proper places in the drawings which are used in the following explanation.

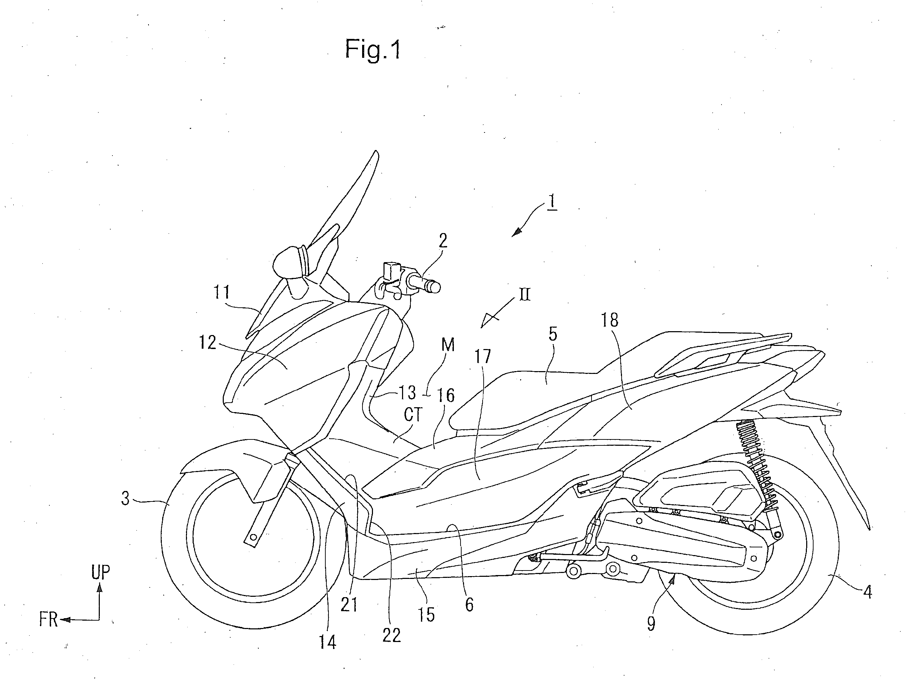

As shown in FIG.1, a scooter type motorcycle (straddle type vehicle) 1 has a front wheel 3 steered by a bar handle 2, and a rear wheel 4 driven by a swing unit 9. Components of steering system including the bar handle 2 and the front wheel 3 are pivotally supported so as to be steerable on a head pipe of a front end of a vehicle body frame (None of them is illustrated). The front portion lower side of the swing unit 9 is vertically, swingably, and pivotally supported on the lower portion rear side of the vehicle body frame. A straddle seat 5 for passenger is supported on the upper portion rear side of the vehicle body frame. A straddling portion M which is comparably low in vehicle height is provided between the bar handle 2 and the seat 5. Right and left floor steps 6 on which a passenger seated on the seat 5 puts the feet are provided on both right and left sides of the straddling portion M. A center tunnel CT has an upwardly protruding shape and longitudinally extended is provided between the right and left floor steps 6.

A cowling cover covering the vehicle body of the motorcycle 1 has a front center cover 11 covering the periphery of the head pipe from the front direction, right and left front side covers 12 covering the periphery of the head pipe from the front and outer side direction, a front inner cover 13 covering the periphery of the head pipe from the rear direction and forming the front portion of the center tunnel CT and right and left footrests 21, right and left floor front covers 14 connected to the lower and rear direction of the right and left front side covers 12, right and left floor side covers 15 connected to the lower and rear direction of the right and left floor front covers 14, a center upper cover 16 connected to the lower and rear direction of the front inner cover 13 and forming a rear portion side surface of the center tunnel CT, right and left center side covers 17 connected to the lower portion rear direction of the front inner cover 13, simultaneously, forming the rear portion side surface of the central tunnel CT, right and left rear side covers 18 connected to the rear direction of the center upper cover 16 and to the rear direction of the right and left center side cover 17, and covering the rear portion of the vehicle body from the side direction. The right and left floor steps 6 which are approximately horizontal are provided above the right and left floor side covers 15.

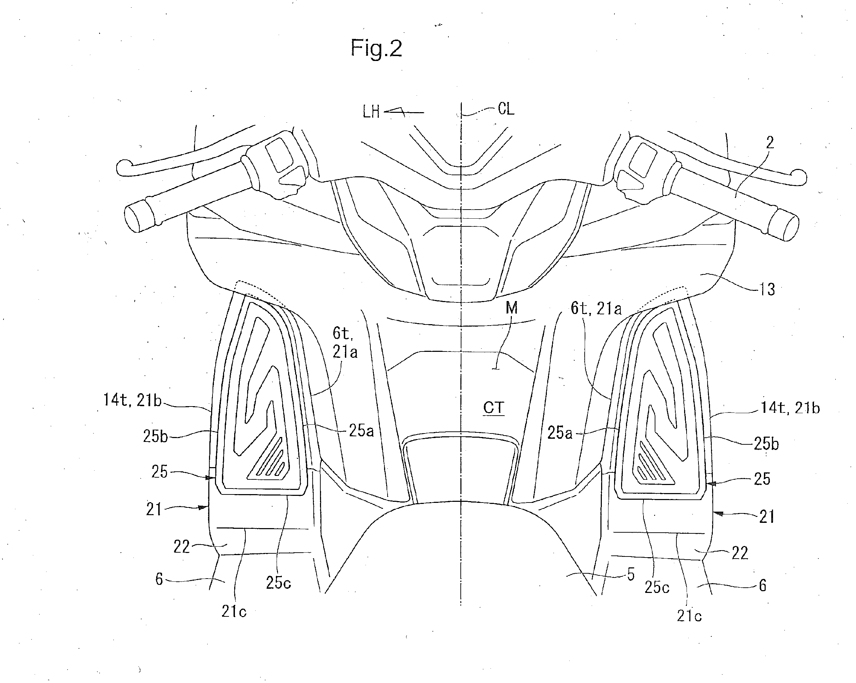

With also reference to FIG.2, right and left footrests 21 like a plane are provided in the front direction of the right and left floor steps 6 so as to be inclined upward to the front direction through a vertical wall portion 22 standing upward. The right and left footrests 21 has a longitudinally long and tapered shape as it goes to the front side in each plane perpendicular direction view. Step floor members 25 which are the insert molding component of the present embodiment are attached on the right and left footrests 21, respectively. The right and left footrests 21 and the right and left step floor members 25 have the symmetrical configuration relative to the respective horizontal center lines CL of the vehicle body.

The footrest 21 has an inside edge 21a wherein the front side is obliquely extended along a lower end edge 6t of the center tunnel CT so as to be positioned on both outer sides, in the plane perpendicular direction view shown in FIG.2, and the front portion is curved to both outer sides, an outside edge 21b wherein the front side is obliquely extended so as to be positioned on both inner sides along an upper end edge 14t of the floor front cover 14, and the front portion is further obliquely bent to both inner sides, and rear end edges 21c extended right and left so as to bridge between the rear lower end of an inside edge 21a and the rear lower end of an outside edges 21b.

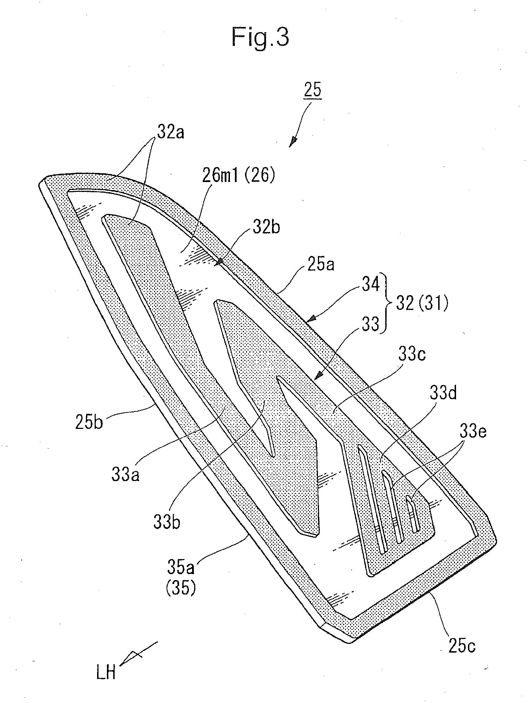

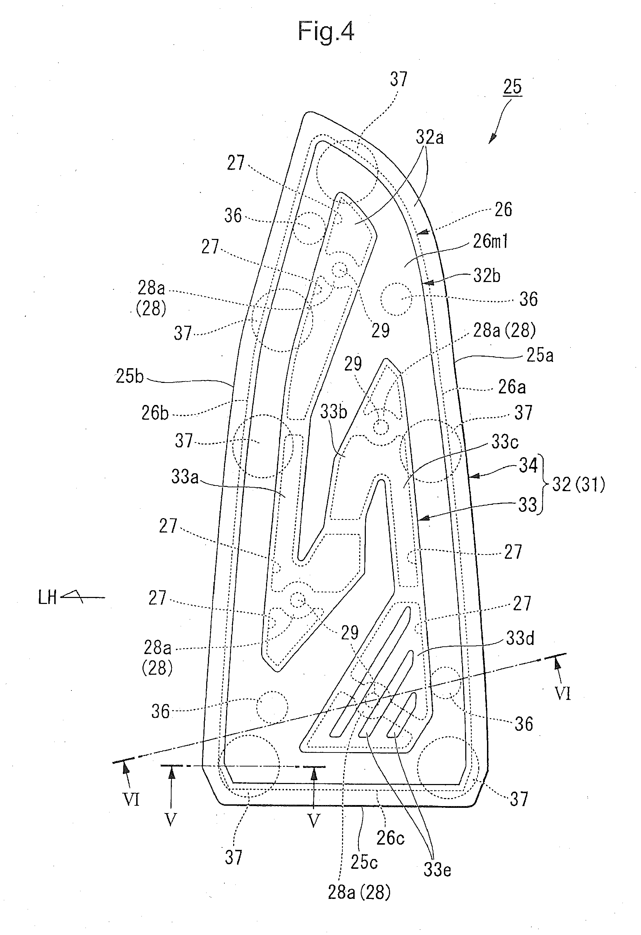

With also reference to FIGs.3 and 4, the step floor member 25 is formed in a plate shape so as to be along the footrest 21. The step floor member 25 is provided in a slightly smaller shape than the footrest 21 in the plane perpendicular direction view. The step floor member 25 has a member inside edge 25a, a member outside edge 25b, and a member rear end edge 25c which are formed so as to be along the inside edge 21a, the outside edge 21b, and the rear end edge 21c respectively.

The step floor member 25 has, for example, a base member 26 in which a plate-shaped steel is cut and formed in a predetermined shape, for example, a covering member 31 (floor member) made of synthetic rubber including EPDM (Ethylene Propylene Rubber) and the like and integrally formed so as to cover the periphery of the base member 26.

The base member 26 is formed in a further smaller size in the thickness direction (plane perpendicular direction) view. The base member 26 has a base inside edge 26, a base outside edge 26b, and a base rear end edge 26c, and is formed so as to be along the member inside edge 25a, the member outside edge 25b, and the member rear end edge 25c, respectively.

With reference to FIG.4, a surface covering portion 32 of the covering member 31 is integrally provided on a surface 26m1 of the base member 26. The surface covering portion 32 has a surface inner periphery covering portion 33 extended so as to draw an N shape while changing the trace width in the plane perpendicular direction view of the step floor member 25. A base opening 27 which has a slightly smaller shape than the surface inner periphery covering portion 33 is formed on the part covered by the surface inner periphery covering portion 33 of the base member 26.

A plurality (for example, six) of construct portions 28 are formed and provided on the base opening 27 so as to cross the proper points of the trace drawing the N shape. A widening portion 28a is formed on a part (for example, three) of the plurality of construct portions 28 so as to form a circular shape with a larger diameter than the width of the construct portion 28. A locating hole 29 (locate hole), which can position the simple base member 26 without forming the covering member 31 in the surface direction (plane direction), is formed on the widening portion 28a at the time of insert molding of the step floor member 25. The locating hole 29 is formed so as to match and insert a locate pin 45 with a circular cross section. The plurality of locating holes 29 and the plurality of locate pins 45 are provided so as to control the rotation of the base member 26. Moreover, the base member 26 may have a shape such as curving or bending. The "plane perpendicular direction" is equivalent to the parting direction of the die at the time of insert molding, and the "plane direction" is equivalent to an orthogonal direction to the "plane perpendicular direction".

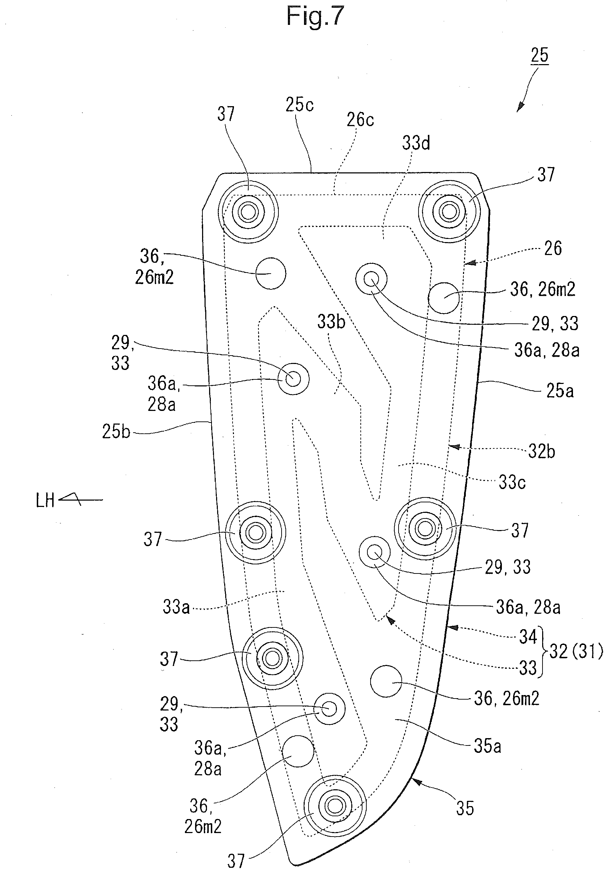

With reference to FIGs.4 to 7, the covering member 31 has a surface covering portion 32 integrally formed on the surface 26m1 side of the base member 26, a reverse side covering portion 35 integrally formed on a reverse surface 26m2 side of the base member 26.

The surface covering portion 32 has a surface outer periphery covering portion 34 extending with a predetermined width along the outer periphery edge of the base member 26, the surface inner periphery covering portion 33 formed on the inner periphery side of the surface outer periphery covering portion 34 so as to be separated.

The surface outer periphery covering portion 34 and the surface inner periphery covering portion 33 forms a step surface 32a (tread surface, design surface) which are in flush level each other and parallel to the surface 26m1 of the base member 26. The portion avoiding the surface outer periphery covering portion 34 and the surface inner periphery covering portion 33 on the surface of the step floor member 25 is equivalent to an opening 32b which exposes the surface 26m1 of the base member 26 to the outside.

The surface inner periphery covering portion 33 has a first extended portion 33a extended backward from the front portion of the base member 26 and approximately parallel to the base outside edge 26b at the separated position to the inner periphery side of the base outside edge 26b, a second extended portion 33b obliquely extended from the rear end of the first extended portion 33a to the front direction and both inner sides direction, a third extended portion 33c extended backward from the front end of the second extended portion 33b and approximately parallel to the base inside edge 26a at the separated position on the inner periphery side of the base outside edge 26b. The rear portion of the third extended portion 33c is a triangular-shaped portion 33d which widens as it approaches to the rear side. A plurality of recessed grooves 33e are formed on the triangular-shaped portion 33d and are inclined so as to be positioned on both outer sides as it approaches to the rear end.

The reverse side covering portion 35 is provided so as to entirely cover the reverse surface 26m2 of the base member 26. The reverse side covering portion 35 forms a covering reverse surface 35a which is parallel to the reverse surface 26m2 of the base member 26. The outer periphery portion of the reverse side covering portion 35 and the outer periphery portion of the surface outer periphery covering portion 34 are integrated each other in the thickness direction (plane perpendicular direction) of the step floor member 25. The outer periphery portion of the base member 26 covers the entire outer periphery portion of the covering member 31.

A molding supporting portion (molding time supporting portion) 36 which can support the reverse surface 26m2 of the base member 26 at the time of insert molding is provided on the portion which is the reverse side of the opening 32b of the reverse side covering portion 35. The molding supporting portion 36 is formed so as to abut and support the reverse surface 26m2 of the base member 26 at the column-shaped tip portion of a first supporting pin 43 described later of a die 40. The molding supporting portion 36 has a circular shape in the plane perpendicular direction view, and exposes the reverse surface 26m2 of the base member 26 to the reverse side of the step floor member 25. The two molding supporting portions 36a are provided on the front portions and the rear portion of the molding supporting portion 36a respectively, in total four thereof.

The opening 32b exposing the base member 26 of the surface covering portion 32 abuts and adheres an opening forming portion 47 of the die 40 to the surface 26m1 of the base member 26 at the time of insert molding, and is formed so as not to flow a molten resin J to the area forming the opening 32b. Then, in order to prevent the burr on the periphery edge of the opening 32b, the opening forming portion 47 has to be tightly adhered to the base member 26. In order to tightly adhere the opening forming portion 47 to the base member 26, the base member 26 has to be supported from the reverse side. Then, it often happens to warp the plate-like base member 26 or to mark on the reverse side covering portion 35 in a various way, depending on the places for supporting the base member 26.

Meanwhile, the molding supporting portion 36 for supporting the reverse surface 26m2 of the base member 26 is provided on the part which is the reverse side of the opening 32b in the present embodiment. Accordingly, when the opening forming portion 47 of the die 40 is adhered to the base member 26 at the time of insert molding of the step floor member 25, the pressing force on the base member 26 by the opening forming portion 47 is directly supported on the base member 26 of the molding supporting portion 36 from the reverse side. Therefore, the adhesion of the opening forming portion 47 is secured and the occurrence of burrs and the like is suppressed. In addition to that, the warp and the like of the plate-like base member 26 can be suppressed, compared with the case that the molding supporting portion 36 (a first supporting pin 43) is provided at the position avoiding the opening 32b (the opening forming portion 47). Moreover, the base member 26 can be efficiently supported with the minimum molding supporting portion 36, and the supported mark of the base members 26 on the reverse side can be reduced, simultaneously, securing the formability can be facilitated.

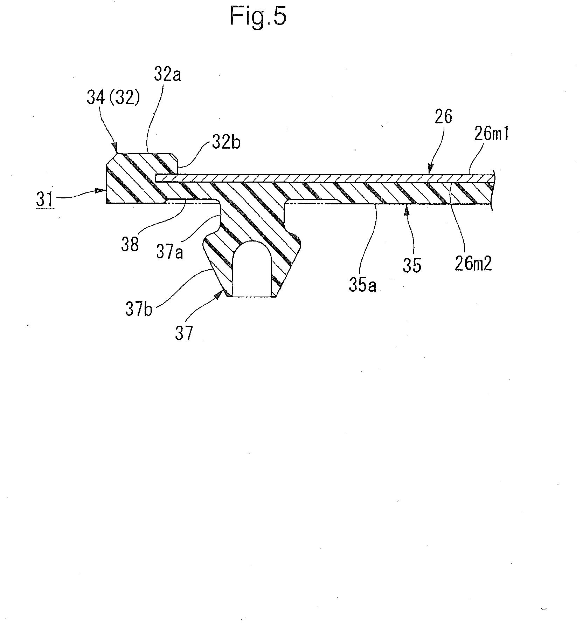

A plurality of projecting portions 37 which can attach the step floor member 25 to the footrest 21 on the part which is a reverse side of the opening 32b and which avoids the molding supporting portion 36 of the reverse side covering portion 35. With reference to FIG.5, the projecting portion 37 has a column-shaped base portion 37a along the plane perpendicular direction of the step floor member 25, and a bevel portion 37b extended the diameter so as to be connected to the tip portion of the base portion 37a. The bevel portion 37b is formed in a cup shape (in a hollow shape) opened to the tip side, and is inserted into and engaged with an engaging hole (not shown) of the footrest 21 by elastically deforming so as to reduce the diameter. The step floor member 25 is attached to the footrest 21 with the plurality of projecting portions 37. A base end recessed portion 38 is formed on the covered reverse surface 35a of the part forming the projecting portion 37 of the reverse side covering portion 35 so as to change the position of the area which has a larger diameter than the projecting portion 37 to the base member 26 side which is in a shallow position. Accordingly, a fillet surface formed on the corner portion of the base end of the projecting portion 37 is hardly interfered with the periphery edge of the engaging hole.

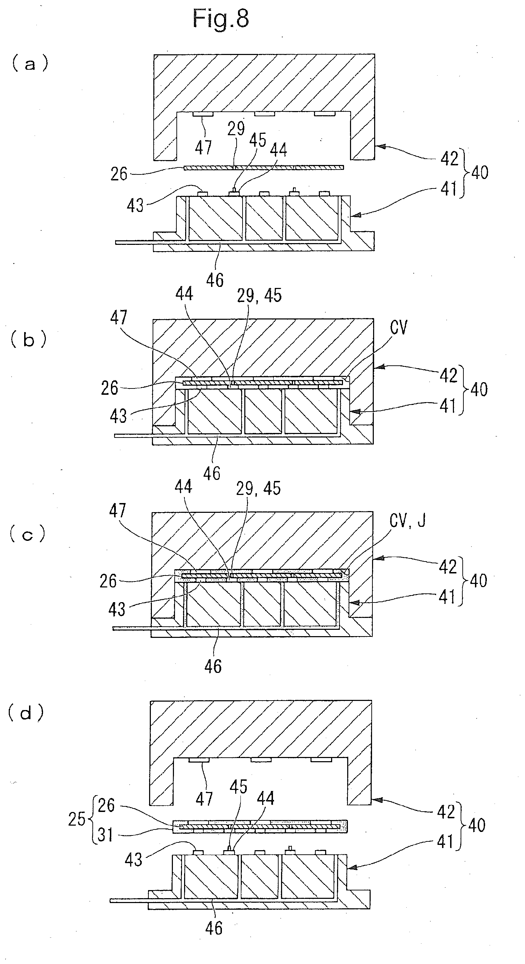

As shown in FIG.8, the die 40 (molding die) forming the step floor member 25 has a fixed die 41 positioned on the lower side of the drawing, and a movable die 42 positioned on the upper side in the drawing. For the convenience to show in the drawings, the fixed die 41 is shown as a lower die, the movable die 42 is shown as an upper die, which may be vertically reversed and which may have a configuration that the fixed die and the movable die positions so as to be close and opposite relative to the horizontal direction unlike the vertical direction.

The die 40 is formed in a mold clamping state that the movable die 42 closely approaches to the fixed die 41, and forms a molding space CV inside the die 40 in the state. The die 40 sets the base member 26 inside the molding space CV, and can integrally form the covering member 31 in the vicinity of the base member 26.

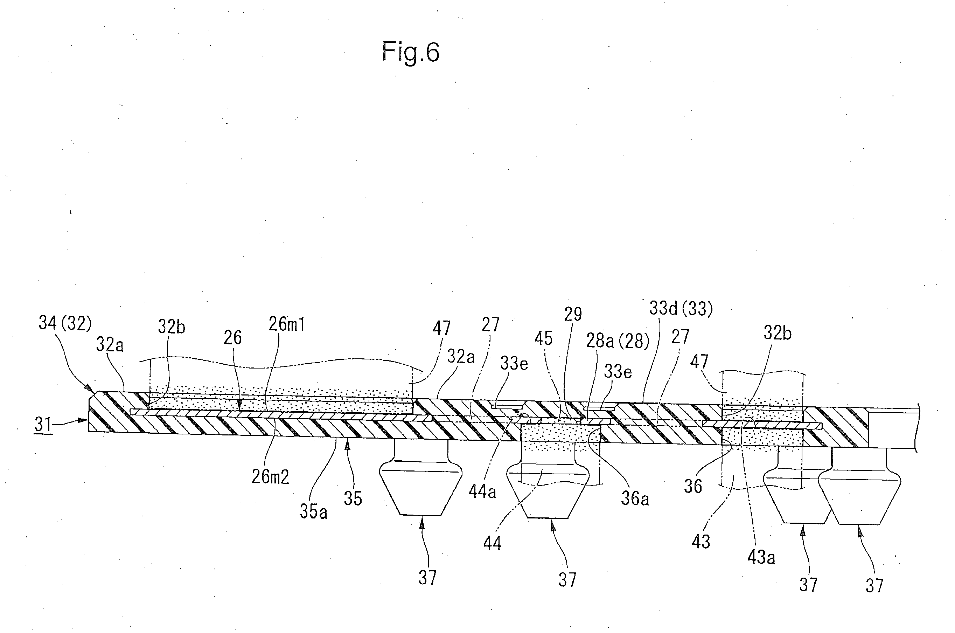

For example, a plurality of column-shaped supporting pins stand on the fixed die 41 (lower surface) so as to abut the tip surface (upper end surface) on the reverse surface 26m2 (lower surface) of the base member 26. With reference to FIG.6, the plurality of supporting pins are separated into a first supporting pin 43 which abuts a tip surface 43a on the reverse surface 26m2 of the part forming the opening 32b of the covering member 31 in the base member 26, a second supporting pin 44 which abuts a tip surface 44a on the reverse surface 26m2 of the part covered by the covering member 31 of the base member 26, simultaneously, wherein the tip projecting portion (the locate pin 45) is inserted into the locating hole 29 formed on the base member 26 in a mating state.

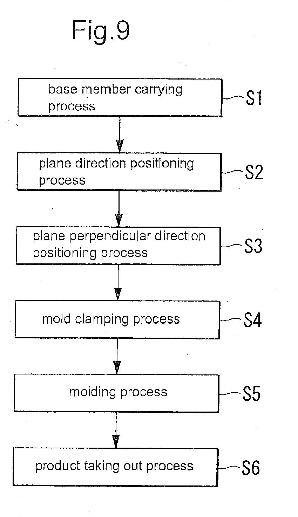

With reference to FIGs.8 and 9, the process for manufacturing the floor step member 25 will be explained in the configuration. Firstly, with reference to FIGs.8(a) and 9, when the movable die 42 is separated relative to the fixed die 41 in a mold opening state, the base member 26 is carried to the predetermined position inside the die 40 so as to be substantially horizontal (a base member carrying process S1). Next, The locate pin 45 of the plurality of second supporting pin 44 of the fixed die 41 is inserted into the plurality of locating holes 29 of the base member 26 in the matching state (a plane direction positioning process S2). Accordingly, the base member 26 is positioned in the horizontal direction (plane direction).

With also reference to FIG.6, for example, the locate pin 45 is provided on the step-shaped tip portion (upper end portion) of the second supporting pin 44. The second supporting pin 44 forms a height difference surface (tip surface 44a) which can abut the reverse surface 26m2 of the base member 26 on the outer periphery of the base end of the locate pin 45. The first supporting pin 43 which can abut the tip surface 43a on the reverse surface 26m2 of the base member 26 is disposed on the part avoiding the second supporting pin 44 of the fixed die 41.

With reference to FIGs.8 (b) and 9, the movable die 42 approaches to the fixed die 41 during the plane direction positioning process S2 in a state that the base member 26 is positioned in the plane direction. An opening forming portion 47 is provided on the movable die 42 so as to have the same shaped adhere portion as the opening 32b of the covering member 31. The opening forming portion 47 is configured so as to abut and adhere the opening forming portion 47 on the surface 26m1 (upper surface) of the base member 26, to prevent the molten resin J from flowing into the adhered portion and to form the opening 32b of the covering member 31. As above mentioned, when the movable die 42 approaches to the fixed die 41, the opening forming portion 47 of the movable die 42 and the first supporting pin 43 of the fixed die 41 sandwiches the base member 26 (a plane perpendicular direction positioning process S3). Accordingly, the base member 26 is positioned in the vertical direction (plane perpendicular direction).

During the plane perpendicular direction positioning process S3, the opening forming portion 47 is adhered to the surface 26m1 of the base member 26 with a predetermined force. The force is directly supported by the first supporting pin 43 from the reverse surface 26m2 side of the base member 26. Accordingly, the adhesion of the opening forming portion 47 is fully strengthened and suppresses the occurrence of the burr and the like of the opening 32b, simultaneously, suppresses the deflection and the like of the base member 26 due to the adhesion. Namely, the opening forming portion 47 and the supporting pin sandwich the base member 26 and so as to be oppositely positioned. Accordingly, the occurrence of bending and sharing stress of the base member 26 sandwiched by the opening forming portion 47 and the supporting pin.

In the present embodiment, during the plane perpendicular direction positioning process S3, the height difference surface (tip surface 44a) of the second supporting pin 44 still abuts on the lower surface (reverse surface 26m2) of the base member 26. The height difference surface may be configured so as to be separated from the base member 26. The part (widening portion 28a) where in the height difference surface of the second supporting pin 44 abuts on the lower surface of the base member 26 is a second molding supporting portion (molding time supporting portion) 36a supporting the reverse surface 26m2 of the base member 26 at the time of insert molding.

In a state that the base member 26 is positioned by the plane direction and the plane perpendicular direction, the fixed die 41 and the movable die 42 closes with the predetermined mold clamping force (a mold clamping process S4). Accordingly, a cavity (molding space) CV is formed inside the die 40. With reference to FIGs.8(c) and 9, the covering member forming material (molten resin) J is injected into the cavity CV, for example, through a channel 46 provided on the fixed die 41, and the covering member 31 is formed around the base member 26. The integrated floor step member 25 is formed by cooling and solidifying the covering member forming material J (a molding process S5). With reference to FIGs.8 (d) and 9, after the molding process S5, the product is taken out from inside the die 40 by opening the die 40 (a product taking out process S6), which completes the manufacture of the step floor member 25.

As explained above, according to the insert molding component and the manufacturing method in the above-mentioned embodiment, at the time of insert molding, and when the opening forming portion 47 of the die 40 is adhered to the surface 26m1 of the base member 26. Simultaneously, the part which is the reverse side of the opening 32b supports the reverse surface 26m2 of the base member 26. Accordingly, the adhesion of the opening forming portion 47 is secured and the occurrence of the burrs and the like is suppressed. In addition to that, the warp and the like of the plate-like base member 26 can be suppressed. Moreover, the minimum molding supporting portion 36 can effectively support the base member 26. The supported mark of the base members 26 on the reverse side can be reduced, simultaneously, securing the formability can be facilitated. Thus, in the insert molding component integrally forms the covering member 31 on the plate-like base member 26. Simultaneously, the opening 32b partially exposing the surface 26m1 of the base member 26 is formed on the covering member 31, which can create a novel external appearance and also can facilitate to secure the quality control by suppressing the occurrence of the burr, the warp, and the like.

Moreover, the plane direction of the base member 26 is positioned by the locating hole 29 provided on the part where the covering member 31 covers the surface 26m1 of the base member 26 at the time of insert molding. Accordingly, the locating hole 29 is not exposed to the surface 26m1 side of the base member 26, namely, the design surface side of the step floor member 25, which suppresses the influence of the external appearance of the step floor member 25. Moreover, compared with the configuration where in the outer periphery portion of the base member 26 is positioned, the covering member 31 can easily cover the entire outer periphery of the base member 26.

Moreover, the base opening 27 is formed along the pattern shape of the surface inner periphery covering portion 33 on the part where the surface 26m1 of the base member 26 is covered with the covering member 31. Accordingly, when the covering member 31 is formed on the surface and the reverse of the base member 26, the covering member forming material J can favorably flows. Simultaneously, when the covering member 31 has an elasticity by forming the covering member 31 with rubber and the like, compared with the case without the base opening portion 27, the bottom touching feeling of the covering member 31 can be suppressed and the elasticity can be increased. The step floor member 25 can be formed with high elasticity while suppressing the thickness.

Moreover, the projecting portion 37 is provided for attaching the step floor member 25 to the footrest 21 at the part avoiding the molding supporting portion 36on the reverse side of the opening 32b in the reverse side covering portion 35 of the covering member 31. Accordingly, even if the base opening portion 27 is formed, the sink mark and the like can be suppressed to be generated by the formation of the projecting portion 37 on the surface inner periphery covering portion 33, which can easily secure the external appearance quality.

Moreover, the present invention is not limited to the above-mentioned embodiment. For example, the second supporting pin 44 is a stepped pin forming the tip surface 44a (height difference surface), but it may be configured so as not to form the tip surface (the base member 26 is not supported in the plane perpendicular direction). Then, the present invention can be applied not only to the step floor member of the scooter type motorcycle, but also to various insert molding components in addition to various components of vehicles including a three-wheeled vehicle or a four-wheeled vehicle.

The present invention aims to facilitate the quality control while forming an opening which partly exposes a surface of the base member on a covering member, in an integrally form insert molding component which is integrally molding a covering member on a plate-like base member and the manufacturing method.

A plate-like base member 26 and a covering member 31 integrally formed with the base member 26 are equipped. An opening 32b exposing a surface 26m1 of the base member 26 is formed on an one side of the base member 26 of the covering member 31 in the plane perpendicular direction, and a molding supporting portion 36 supporting a reverse surface 26m2 of the base member 26 at the time of insert molding is provided on the other side of the covering member 31 in the plane perpendicular direction, where is a reverse side of the opening 32b.

## Claims

1. An insert molding component (25) comprising a plate-like base member (26) and a covering member (31) integrally formed with said base member (26), wherein
an opening (32b) exposing a surface (26m1) of said base member (26) is formed on one side of the plane perpendicular direction of said base member (26) in said covering member (31), and a molding supporting portion (36) supporting a reverse surface (26m2) of said base member (26) at the time of insert molding is provided on the other side of said covering member (31) in said plane perpendicular direction, where is a reverse side of said opening (32b),
wherein the covering member (31) has a surface covering portion (32) integrally formed on the surface (26m1) side of said base member (26), and a reverse side covering portion (35) integrally formed on a reverse surface (26m2) side of the base member (26), said surface covering portion (32) having a surface outer periphery covering portion (34) extending with a predetermined width along an outer periphery edge of the base member (26), and a surface inner periphery covering portion (33) formed on the inner periphery side of the surface outer periphery covering portion (34) so as to be separated;
a base opening (27) having a slightly smaller shape than the surface inner periphery covering portion (33) is formed along the pattern shape of the surface inner periphery covering portion (33) on the part of the base member (26) where the surface (26m1) of said base member (26) is covered with said surface inner periphery covering portion (33), wherein the surface outer periphery covering portion (34) and the surface inner periphery covering portion (33) are solely connected via the reverse side covering portion (35) and said base opening (27);
a plurality of construct portions (28) are formed and provided on the base opening (27) so as to cross the base opening (27) at proper points of the trace, drawing the shape of the surface inner periphery covering portion (33);
a widening portion (28a) is formed on a part of the plurality of construct portions (28) so as to form a circular shape with a larger diameter than the width of the construct portion (28); and
a locating hole (29), which is configured to position the base member (26) without forming the covering member (31) in the plane direction at the time of insert molding of the step floor member (25), is formed on the widening portion (28a).

2. The insert molding component according to claim 1 **characterized in that** a locating hole (29) positioning said base member (26) in the plane direction at the time of insert molding is formed on the part where the surface (26m1) of said base member (26) is covered with said covering member (31).

3. The insert molding component according to claim 1 or 2 **characterized in that** a projecting portion (37) which can attach the insert molding component (25) to a mating component (21) is formed so as to avoid said molding time supporting portion (36) on the other side of said covering member (31) in said plane perpendicular direction, where is a reverse side of said opening (32b).

4. A manufacturing method of an insert molding component (25) according to claim 1 comprising a plate-like base member (26) and a covering member (31) integrally formed with said base member (26), said manufacturing method forming a molding space (CV) by mold clamping a fixed die (41) and a movable die (42) of a die (40), and integrally forming the covering member (31) on the plate-like base member (26) set in the molding space (CV),
wherein an opening forming portion (47) of said die (40) is adhered to the surface (26m1) of said base member (26) in order to form the opening (32b) exposing the surface (26m1) of said base member (26) on the one side of said base member (26) of said covering member (31) in the plane perpendicular direction, simultaneously the manufacturing method includes: a plane perpendicular direction positioning process (S3) supporting the reverse surface (26m2) of said base member (26) on the other side of said base member (26) in said plane perpendicular direction, where is a reverse side of said base member (32b); a mold clamping process (S4) forming said molding space (CV) by mold clamping said fixed die (41) and said movable die (42) in a state that said opening forming portion (47) is adhered to the surface (26m1) of said base member (26) and the reverse surface (26m2) of said base member (26) is supported at the part where is the reverse side of said opening (32b); and a molding process (S5) forming said covering member (31) by injecting a covering member forming material (J) into said molding space (CV),
wherein the covering member (31) has a surface covering portion (32) integrally formed on the surface (26m1) side of said base member (26), and a reverse side covering portion (35) integrally formed on a reverse surface (26m2) side of the base member (26), said surface covering portion (32) having a surface outer periphery covering portion (34) extending with a predetermined width along an outer peripheral edge of the base member (26), and a surface inner periphery covering portion (33) formed on the inner periphery side of the outer periphery covering portion (34) so as to be separated;
a base opening (27) having a slightly smaller shape than the surface inner periphery covering portion (33) is formed along the pattern shape of the surface inner periphery covering portion (33) on the part of the base member (26) where the surface (26m1) of said base member (26) is covered with said surface inner periphery covering portion (33), wherein the surface outer periphery covering portion (34) and the surface inner periphery covering portion (33) are integrally molded in said molding process via said base opening (27) such that the surface outer periphery covering portion (34) and the surface inner periphery covering portion (33) are solely connected via the reverse side covering portion (35) and said base opening (27);
a plane direction positioning process (S2) is also included so as to position said base member (26) in the plane direction by a locating hole (29) formed on a part of the base member (26) where the surface (26m1) of said base member (26) is covered with said covering member (31);
a plurality of construct portions (28) are formed and provided on the base opening (27) so as to cross the base opening (27) at proper points of the trace, drawing the shape of the surface inner periphery covering portion (33);
a widening portion (28a) is formed on a part of the plurality of construct portions (28) so as to form a circular shape with a larger diameter than the width of the construct portion (28); and
the locating hole (29), which is configured to position the base member (26) without forming the covering member (31) in the plane direction at the time of insert molding of the step floor member (25), is formed on the widening portion (28a).

## Patentansprüche

1. Einsatzformkomponente (25), die ein plattenartiges Basiselement (26) und ein mit dem Basiselement (26) integriert ausgebildetes Abdeckelement (31) aufweist, wobei
eine Öffnung (32b), die zu einer Oberfläche (26m1) des Basiselements (26) freiliegt, an einer Seite der zur Ebene senkrechten Richtung des Basiselements (26) in dem Abdeckelement (31) ausgebildet ist, und ein Formträgerabschnitt (36), der eine hintere Oberfläche (26m2) des Basiselements (26) während des Einsetzformens trägt, an der in der zur Ebene senkrechten Richtung anderen Seite des Abdeckelements (31) vorgesehen ist, wo sich eine Rückseite der Öffnung (32b) befindet,
wobei das Abdeckelement (31) einen Oberflächenabdeckabschnitt (32), der integriert an der Oberflächen (26m1)-Seite des Basiselements (26) ausgebildet ist, sowie einen rückseitigen Abdeckabschnitt (35), der an einer hinteren Oberflächen (26m2)-Seite des Basiselements (26) ausgebildet ist, aufweist, wobei der Oberflächenabdeckabschnitt (32) einen Oberflächenaußenumfangsabdeckabschnitt (34), der sich mit einer vorbestimmten Breite entlang einem Außenumfangsrand des Basiselements (26) erstreckt, sowie einen Oberflächeninnenumfangsabdeckabschnitt (33), der an der Innenumfangsseite des Oberflächenaußenumfangsabdeckabschnitts (34) davon getrennt ausgebildet ist, aufweist;
eine Basisöffnung (27), der eine etwas kleinere Form hat als der Oberflächeninnenumfangsabdeckabschnitt (33), entlang der Musterform des Oberflächeninnenumfangsabdeckabschnitts (33) an dem Teil des Basiselements (26) ausgebildet ist, wo die Oberfläche (26m1) des Basiselements (26) mit dem Oberflächeninnenumfangsabdeckabschnitt (33) abgedeckt ist, wobei der Oberflächenaußenumfangsabdeckabschnitt (34) und der Oberflächeninnenumfangsabdeckabschnitt (33) nur über den rückseitigen Abdeckabschnitt (35) und die Basisöffnung (27) verbunden sind;
eine Mehrzahl von Konstruktionsabschnitten (28), die an der Basisöffnung (27) ausgebildet und so vorgesehen sind, dass sie die Basisöffnung (27) an geeigneten Punkten der Bahn überqueren, die die Form des Oberflächeninnenumfangsabdeckabschnitts (33) beschreibt;
ein erweiterter Abschnitt (28a) an einem Teil der Mehrzahl von Konstruktionsabschnitten (28) ausgebildet ist, um eine Kreisform mit größerem Durchmesser als der Breite des Konstruktionsabschnitts (28) zu bilden; und
ein Lokalisierungsloch (29), das konfiguriert ist, um das Basiselement (26) zu positionieren, ohne während des Einsetzformens des Trittbodenelements (25) das Abdeckelement (31) in der Ebene-Richtung auszubilden, an dem erweiterten Abschnitt (28a) ausgebildet ist.

2. Die Einsatzformkomponente nach Anspruch 1,
**dadurch gekennzeichnet, dass** ein Lokalisierungsloch (29), das das Basiselement (26) in der Ebene-Richtung während des Einsetzformens positioniert, an dem Teil ausgebildet ist, wo die Oberfläche (26m1) des Basiselements (26) mit dem Abdeckelement (31) abgedeckt ist.

3. Die Einsatzformkomponente nach Anspruch 1 oder 2,
**dadurch gekennzeichnet, dass** ein Vorsprungsabschnitt (37), der die Einsatzformkomponente (25) an einer zusammenpassenden Komponente (21) anbringen kann, so ausgebildet ist, dass er den Formungszeit-Trägerabschnitt (36) an der anderen Seite des Abdeckelements (31) in der zur Ebene senkrechten Richtung, wo sich eine Rückseite der Öffnung (32b) befindet, vermeidet.

4. Herstellungsverfahren einer Einsatzformkomponente (25) nach Anspruch 1, das ein plattenartiges Basiselement (26) und ein mit dem Basiselement (26) integriert ausgebildetes Abdeckelement (31) aufweist, wobei das Herstellungsverfahren durch Formklemmen einer festen Form (41) und einer beweglichen Form (42) einer Form (40) einen Formungsraum (CV) ausbildet und das Abdeckelement (31) an dem in den Formungsraum (CV) eingesetzten plattenartigen Basiselement (26) integriert ausbildet,
wobei ein Öffnungsbildungsabschnitt (47) der Form (40) an der Oberfläche (26m1) des Basiselements (26) haftet, um die Öffnung (32b) zu bilden, die die Oberfläche (26m1) des Basiselements (26) an der einen Seite des Basiselements (26) des Abdeckelements (31) in der zur Ebene senkrechten Richtung freilegt, wobei das Herstellungsverfahren gleichzeitig enthält: einen Zur-Ebene-senkrechte-Richtung-Positionierungsprozess (S3), der die hintere Fläche (26m2) des Basiselements (26) an der anderen Seite des Basiselements (26) in der zur Ebene senkrechten Richtung, wo sich eine Rückseite des Basiselements (32b) befindet, stützt; einen Formklemmprozess (S4), der den Formungsraum (CV) durch Formklemmen der festen Form (41) und der beweglichen Form (42) in einem Zustand ausbildet, in dem der Öffnungsbildungsabschnitt (47) an der Oberfläche (26m1) des Basiselements (26) haftet, und die hintere Oberfläche (26m2) des Basiselements (26) an jenem Teil gestützt wird, wo sich die Rückseite der Öffnung (32b) befindet; und einen Formungsprozess (S5), der das Abdeckelement (31) durch Einspritzen eines Abdeckelement-bildenden Materials (J) in den Formungsraum (CV) bildet,
wobei das Abdeckelement (31) einen Oberflächenabdeckabschnitt (32) aufweist, der integriert an der Oberfläche (26m1)-Seite des Basiselements (26) ausgebildet ist, sowie einen rückseitigen Abdeckabschnitt (35), der integriert an der hinteren Oberflächen (26m2)-Seite des Basiselements (26) ausgebildet ist, aufweist, wobei der Oberflächenabdeckabschnitt (32) einen Oberflächenaußenumfangsabdeckabschnitt (34), der sich mit einer vorbestimmten Breite entlang einem Außenumfangsrand des Basiselements (26) erstreckt, sowie einen Oberflächeninnenumfangsabdeckabschnitt (33), der an der Innenumfangsseite des Außenumfangsabdeckabschnitts (34) davon getrennt ausgebildet ist, aufweist;
eine Basisöffnung (27), die eine etwas kleinere Form hat als der Oberflächeninnenumfangsabdeckabschnitt (33), entlang der Musterform des Oberflächeninnenumfangsabdeckabschnitts (33) an dem Teil des Basiselements (26) ausgebildet ist, wo die Oberfläche (26m1) des Basiselements (26) mit dem Oberflächeninnenumfangsabdeckabschnitt (33) abgedeckt ist, wobei in dem Formungsprozess der Oberflächenaußenumfangsabdeckabschnitt (34) und der Oberflächeninnenumfangsabdeckabschnitt (33) über die Basisöffnung (27) integriert geformt werden, so dass der Oberflächenaußenumfangsabdeckabschnitt (34) und der Oberflächeninnenumfangsabdeckabschnitt (33) nur über den rückseitigen Abdeckabschnitt (35) und die Basisöffnung (27) verbunden sind;
auch ein Ebene-Richtung-Positionierungsprozess (S2) enthalten ist, um das Basiselement (26) in der Ebene-Richtung durch ein Lokalisierungsloch (29) zu positionieren, das an einem Teil des Basiselements (26) ausgebildet ist, wo die Oberfläche (26m1) des Basiselements (26) mit dem Abdeckelement (31) abgedeckt ist;
eine Mehrzahl von Konstruktionsabschnitten (28) an der Basisöffnung (27) so ausgebildet und vorgesehen sind, dass sie die Basisöffnung (27) an geeigneten Punkten der Bahn queren, die die Form des Oberflächeninnenumfangsabdeckabschnitts (33) beschreibt;
ein erweiterter Abschnitt (28a) an einem Teil der Mehrzahl von Konstruktionsabschnitten (28) ausgebildet ist, um eine Kreisform mit einem größeren Durchmesser als der Breite des Konstruktionsabschnitts (28) zu bilden; und
das Lokalisierungsloch (29), das konfiguriert ist, um das Basiselement (26) zu positionieren, ohne den Abdeckabschnitt (31) in der ebenen Richtung während des Einsetzformens des Trittbodenelements (25) auszubilden, an dem erweiterten Abschnitt (28a) ausgebildet ist.

## Revendications

1. Composant de moulage par insertion (25) comprenant un organe de base en forme de plaque (26) et un organe de recouvrement (31) formé d'un seul tenant avec ledit organe de base (26), dans lequel
une ouverture (32b) exposant une surface (26m1) dudit organe de base (26) est formée sur un côté du sens perpendiculaire au plan dudit organe de base (26) dans ledit organe de recouvrement (31), et une portion de support de moulage (36) supportant une surface inverse (26m2) dudit organe de base (26) au moment auquel un moulage par insertion est prévu sur l'autre côté dudit organe de recouvrement (31) dans ledit sens perpendiculaire au plan, où il y a un côté inverse de ladite ouverture (32b),
dans lequel l'organe de recouvrement (31) a une portion de recouvrement de surface (32) formée d'un seul tenant sur le côté de surface (26m1) dudit organe de base (26), et une portion de recouvrement de côté inverse (35) formée d'un seul tenant sur un côté de surface inverse (26m2) de l'organe de base (26), ladite portion de recouvrement de surface (32) ayant une portion de recouvrement de périphérie extérieure de surface (34) s'étendant avec une largeur prédéterminée le long d'un bord de périphérie extérieure de l'organe de base (26), et une portion de recouvrement de périphérie intérieure de surface (33) formée sur le côté de périphérie intérieure de la portion de recouvrement de périphérie extérieure de surface (34) de manière à être séparées ;
une ouverture de base (27) ayant une forme légèrement plus petite que la portion de recouvrement de périphérie intérieure de surface (33) est formée le long de la forme de motif de la portion de recouvrement de périphérie intérieure de surface (33) sur la partie de l'organe de base (26) où la surface (26m1) dudit organe de base (26) est recouverte par ladite portion de recouvrement de périphérie intérieure de surface (33), dans lequel la portion de recouvrement de périphérie extérieure de surface (34) et la portion de recouvrement de périphérie intérieure de surface (33) sont uniquement raccordées par l'intermédiaire de la portion de recouvrement de côté inverse (35) et ladite ouverture de base (27) ;
une pluralité de portions de construction (28) sont formées et prévues sur l'ouverture de base (27) de manière à croiser l'ouverture de base (27) à des points appropriés du tracé, en dessinant la forme de la portion de recouvrement de périphérie intérieure de surface (33) ;
une portion d'élargissement (28a) est formée sur une partie de la pluralité de portions de construction (28) de manière à former une forme circulaire avec un diamètre plus grand que la largeur de la portion de construction (28) ; et
un trou de localisation (29), qui est configuré pour positionner l'organe de base (26) sans former l'organe de recouvrement (31) dans le sens de plan au moment du moulage par insertion de l'organe de marchepied (25), est formé sur la portion d'élargissement (28a).

2. Composant de moulage par insertion selon la revendication 1, **caractérisé en ce qu'**un trou de localisation (29) positionnant ledit organe de base (26) dans le sens de plan au moment du moulage par insertion est formé sur la partie où la surface (26m1) dudit organe de base (26) est recouverte par ledit organe de recouvrement (31).

3. Composant de moulage par insertion selon la revendication 1 ou 2, **caractérisé en ce qu'**une portion saillante (37) qui peut attacher le composant de moulage par insertion (25) à un composant d'accouplement (21) est formée de manière à éviter ladite portion de support de moulage (36) sur l'autre côté dudit organe de recouvrement (31) dans ledit sens perpendiculaire au plan, où il y a un côté inverse de ladite ouverture (32b).

4. Procédé de fabrication d'un composant de moulage par insertion (25) selon la revendication 1 comprenant un organe de base en forme de plaque (26) et un organe de recouvrement (31) formé d'un seul tenant avec ledit organe de base (26), ledit procédé de fabrication formant un espace de moulage (CV) par serrage de moule d'une filière fixe (41) et d'une filière mobile (42) d'une filière (40), et formant d'un seul tenant l'organe de recouvrement (31) sur l'organe de base en forme de plaque (26) placé dans l'espace de moulage (CV),
dans lequel une portion de formation d'ouverture (47) de ladite filière (40) est collée à la surface (26m1) dudit organe de base (26) pour former l'ouverture (32b) exposant la surface (26m1) dudit organe de base (26) sur le côté dudit organe de base (26) dudit organe de recouvrement (31) dans le sens perpendiculaire au plan, simultanément le procédé de fabrication inclut : un processus de positionnement de sens perpendiculaire au plan (S3) supportant la surface inverse (26m2) dudit organe de base (26) sur l'autre côté dudit organe de base (26) dans ledit sens perpendiculaire au plan, où il y a un côté inverse dudit organe de base (32b) ; un processus de serrage de moule (S4) formant ledit espace de moulage (CV) par serrage de moule de ladite filière fixe (41) et de ladite filière mobile (42) dans un état dans lequel ladite portion de formation d'ouverture (47) est collée à la surface (26m1) dudit organe de base (26) et la surface inverse (26m2) dudit organe de base (26) est supportée à la partie où il y a le côté inverse de ladite ouverture (32b) ; et un processus de moulage (S5) formant ledit organe de recouvrement (31) par l'injection d'un matériau de formation d'organe de recouvrement (J) dans ledit espace de moulage (CV),
dans lequel l'organe de recouvrement (31) a une portion de recouvrement de surface (32) formée d'un seul tenant sur le côté de surface (26m1) dudit organe de base (26), et une portion de recouvrement de côté inverse (35) formée d'un seul tenant sur un côté de surface inverse (26m2) de l'organe de base (26), ladite portion de recouvrement de surface (32) ayant une portion de recouvrement de périphérie extérieure de surface (34) s'étendant avec une largeur prédéterminée le long d'un bord de périphérie extérieure de l'organe de base (26), et une portion de recouvrement de périphérie intérieure de surface (33) formée sur le côté de périphérie intérieure de la portion de recouvrement de périphérie extérieure de surface (34) de manière à être séparées ;
une ouverture de base (27) ayant une forme légèrement plus petite que la portion de recouvrement de périphérie intérieure de surface (33) est formée le long de la forme de motif de la portion de recouvrement de périphérie intérieure de surface (33) sur la partie de l'organe de base (26) où la surface (26m1) dudit organe de base (26) est recouverte par ladite portion de recouvrement de périphérie intérieure de surface (33), dans lequel la portion de recouvrement de périphérie extérieure de surface (34) et la portion de recouvrement de périphérie intérieure de surface (33) sont moulées d'un seul tenant dans ledit processus de moulage par l'intermédiaire de ladite ouverture de base (27) de sorte que la portion de recouvrement de périphérie extérieure de surface (34) et la portion de recouvrement de périphérie intérieure de surface (33) soient uniquement raccordées par l'intermédiaire de la portion de recouvrement de côté inverse (35) et ladite ouverture de base (27) ;
un processus de positionnement de sens de plan (S2) est également inclus de manière à positionner ledit organe de base (26) dans le sens de plan par un trou de localisation (29) formé sur une partie de l'organe de base (26) où la surface (26m1) dudit organe de base (26) est recouverte par ledit organe de recouvrement (31) ;
une pluralité de portions de construction (28) sont formées et prévues sur l'ouverture de base (27) de manière à croiser l'ouverture de base (27) à des points appropriés du tracé, en dessinant la forme de la portion de recouvrement de périphérie intérieure de surface (33) ;
une portion d'élargissement (28a) est formée sur une partie de la pluralité de portions de construction (28) de manière à former une forme circulaire avec un diamètre plus grand que la largeur de la portion de construction (28) ; et
le trou de localisation (29), qui est configuré pour positionner l'organe de base (26) sans former l'organe de recouvrement (31) dans le sens de plan au moment du moulage par insertion de l'organe de marchepied (25), est formé sur la portion d'élargissement (28a).
